## Europäisches Patentamt
## European Patent Office
## Office européen des brevets

(19)

(11) Numéro de publication: **0 061 959**
**A1**

(12) **DEMANDE DE BREVET EUROPEEN**

(21) Numéro de dépôt: 82400481.6

(22) Date de dépôt: 16.03.82

(51) Int. Cl.³: **B 60 P 3/07**

(30) Priorité: 30.03.81 FR 8106298
13.08.81 FR 8115691

(43) Date de publication de la demande:
06.10.82 Bulletin 82/40

(84) Etats contractants désignés:
AT BE CH DE GB IT LI LU NL SE

(71) Demandeur: Delachapelle, Marcel Joseph Charles
Rue St. Gilles Vithers s/Tholon
F-89110 Aillant Yonne(FR)

(72) Inventeur: Delachapelle, Marcel Joseph Charles
Rue St. Gilles Vithers s/Tholon
F-89110 Aillant Yonne(FR)

(74) Mandataire: Madeuf, Claude Alexandre Jean et al,
CABINET MADEUF 3, avenue Bugeaud
F-75116 Paris(FR)

(54) Remorque à plateau mobile et pivotant plus spécialement pour le transport de véhicules divers.

(57) Le véhicule pouvant être soit remorqué soit autotracté comporte un châssis normal 100 monté sur un ou plusieurs trains de roues (104), ce châssis normal présentant sensiblement en son centre une boîte verticale (108) sur laquelle peut pivoter un bâti intermédiaire (110) présentant un axe central (109) et, si nécessaire, pour assurer un bon fonctionnement du pivotement de ce bâti intermédiaire, des galets fous disposés d'une manière circulaire et reposant sur un plateau monté sur la partie supérieure du châssis (100), puis le bâti intermédiaire (110) supporte au moins deux chemins de roulement longitudinaux (107) placés de part et d'autre de ce bâti puis à la partie arrière de ce dernier est monté au moins un palier dans lequel peut tourner un pignon (117) entraîné par un mécanisme réducteur (112), ce pignon coopérant avec une crémaillère (118), fixée sous un plateau mobile (120) reposant normalement sur les chemins de roulement précités mais pouvant pivoter sur l'arrière du bâti intermédiaire (110) placé sur la remorque, ce plateau (120) portant également un treuil (130) pour permettre la traction du véhicule, par un câble (131), sur le plateau de la remorque.

Fig.5

## Remorque à plateau mobile et pivotant plus spécialement pour le transport de véhicules divers

On connaît déjà des remorques destinées plus spécialement au transport de véhicules tels que voitures de tourisme, camions, camionnettes, véhicules spéciaux civils et militaires, mais toutes ces remorques nécessitent l'emploi, pour le chargement des véhicules, de vérins hydrauliques qui rendent ces remorques d'un prix de revient élevé; en outre, des pannes sont fréquentes car les circuits hydrauliques sont très rapidement endommagés ce qui nécessite un entretien et des réparations souvent coûteuses et qui immobilisent le véhicule.

La présente invention remédie à ces inconvénients en créant une remorque dont le plateau est mobile et pivotant pour faciliter le chargement et le déchargement des véhicules mais dont l'organe moteur est très simple et permet une grande longévité sans demander un entretien important.

Conformément à l'invention, le châssis de la remorque comporte deux chemins de roulement longitudinaux placés de part et d'autre du châssis et à sa partie arrière, au moins, un palier dans lequel peut tourner un pignon entraîné par un mécanisme réducteur, ce pignon coopérant avec une crémaillère fixée sous le plateau mobile reposant normalement sur les chemins de roulement mais pouvant pivoter sur l'arrière du châssis de la remorque, ce plateau pivotant comportant, également à sa partie avant, un treuil pour permettre la traction des véhicules par un câble sur le plateau de la remorque.

Suivant une autre caractéristique de l'invention, le dessous du plateau pivotant comporte deux crémaillères coopérant avec deux pignons solidaires du châssis de la remorque, ces pignons étant alors disposés de part et d'autre du mécanisme réducteur d'entraînement.

Suivant une autre particularité de l'invention le châssis normal, monté sur un ou plusieurs trains de roues, présente sensiblement en son centre une boîte verticale sur laquelle peut pivoter un bâti intermédiaire présentant un axe central et, si nécessaire, pour assurer un bon fonctionnement du pivotement de ce bâti intermédiaire, des galets fous disposés d'une manière circulaire et reposant sur un plateau monté sur la partie supérieure du châssis, puis le bâti intermédiaire supporte au moins deux chemins de roulement longitudinaux placés de part et d'autre de ce bâti puis à la partie arrière de ce dernier est monté au moins un palier dans lequel peut tourner un pignon entraîné par un mécanisme réducteur, ce pignon coopérant avec une crémaillère, fixée sous un plateau mobile, reposant normalement sur les chemins de roulement précités mais pouvant pivoter sur l'arrière du bâti intermédiaire placé sur la remorque, ce plateau portant également un treuil, pour permettre la traction du véhicule, par un câble, sur le plateau de la remorque.

Suivant finalement une autre caractéristique de l'invention, le dessous du plateau pivotant comporte plus d'une crémaillère coopérant avec plus d'un pignon solidaire du bâti intermédiaire de la remorque, ces pignons étant alors disposés de part et d'autre du mécanisme réducteur d'entraînement.

Diverses autres caractéristiques de l'invention ressortent d'ailleurs de la description détaillée qui suit.

Des formes de réalisation de l'objet de l'invention sont représentées, à titre d'exemples, aux dessins annexés.

La fig. 1 est une élévation latérale de la remorque, le plateau étant disposé sur le châssis de la remorque.

La fig. 2 est une élévation latérale de la remorque montrant le plateau en position inclinée arrière, un véhicule étant en cours de chargement sur ce plateau.

La fig. 3 est une élévation arrière de la remorque avec le plateau sur le châssis.

La fig. 4 est une élévation latérale de la remorque en position normale de repos.

La fig. 5 est une élévation arrière de la remorque lors du chargement d'un véhicule disposé transversalement à la voie de circulation, donc au sens de déplacement normal de la remorque.

La fig. 6 est un plan, à plus petite échelle, correspondant à la fig. 2.

La fig. 7 est une coupe sensiblement suivant la ligne IV-IV de la fig. 4.

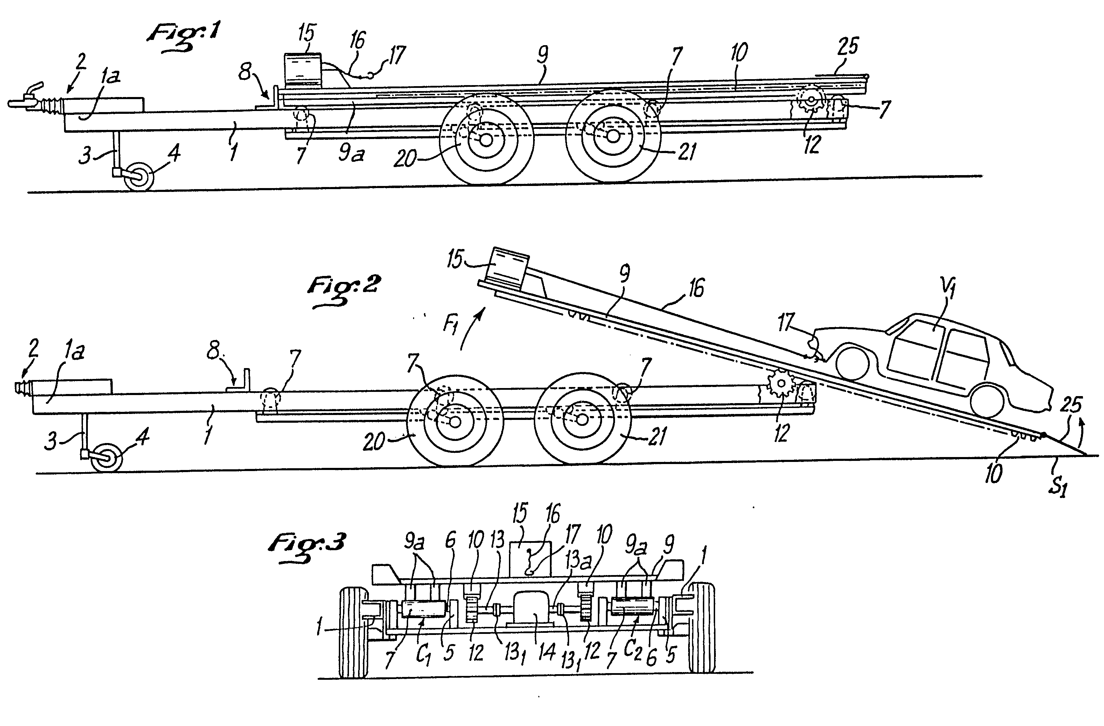

A la fig. 1, on a représenté une remorque dont le châssis 1 est réalisé, comme dans la plupart des cas, par des poutres convenablement entretoisées, et qui présente, à sa partie avant la, un dispositif d'attelage 2 du genre couramment utilisé et qui, par conséquent, ne sera pas décrit dans ce qui suit. 3 désigne la jambe de force avant qui est rétractable de façon que la petite roue 4 soit dégagée du sol lorsque la remorque est attelée à un véhicule tracteur. De plus, et comme cela est visible aux dessins, le châssis 1 de la remorque est supporté dans le cas présent par des trains de roues 20, 21 mais, dans certains cas, on peut utiliser seulement un train de roues.

Comme cela est particulièrement visible aux fig. 2 et 3, le châssis 1 porte deux chemins de roulement $C_1$, $C_2$ formés par des galets supportés par des pièces 5 portant chacun un axe 6 sur lequel peut tourner fou un galet 7. La partie avant du châssis 1 est munie d'une butée transversale 8 contre laquelle vient normalement en contact un plateau 9 qui repose sur les chemins de galets 7 par des renforts 9a et qui comporte deux crémaillères 10 dont les dents sont dirigées vers le bas, les crémaillères 10 sont fixées sur le dessous du plateau 9 par tout moyen convenable et coopèrent avec des pignons dentés 12 qui sont montés sur des arbres 13, 13a entraînés en rotation par un réducteur 14. Des accouplements $13_1$ sont avantageusement prévus sur chaque arbre 13, 13a; le réducteur 14 peut être un réducteur à commande manuelle ou un moto-réducteur d'un type quelconque mais comportant deux sorties motrices. De plus, et comme cela est bien visible aux fig. 1 et 2, la partie avant 9a du plateau 9 porte un treuil 15 sur lequel s'enroule un câble 16 présentant à son extrémité libre un crochet 17 destiné à venir coopérer avec les anneaux de tirage prévus à l'avant de chaque véhicule $V_1$. Le treuil 15 est entraîné par un réducteur manuel ou groupe moto-réducteur non représenté mais placé également à côté du treuil. En général, les moteurs du treuil 15 et du réducteur 14 sont des moteurs électriques alimentés à partir du groupe générateur du tracteur de la remorque mais, dans certains cas, ces moteurs peuvent être également alimentés par des batteries placées sur la remorque 1.

La manoeuvre de la remorque est la suivante.

Lorsqu'on désire transporter un véhicule $V_1$ qui se trouve sur le sol $S_1$ (fig. 2), on amène la remorque devant le véhicule puis on fait reculer, à l'aide du réducteur 14 entraînant en rotation dans le sens des aiguilles d'une montre le pignon 12, le plateau 9 dont les crémaillères 10 permettent aisément le recul. Lorsque ce plateau a suffisamment reculé, il pivote dans le sens de la flèche $F_1$ (fig. 2) et il suffit alors de mettre en place le volet de liaison 25 pour permettre le chargement aisé du véhicule $V_1$ qui est tiré par le câble 16 du treuil 15. Au fur et à mesure de la montée du véhicule $V_1$, le plateau 9 pivote dans le sens contraire à la flèche $F_1$ (fig. 2) autour des pignons 12, à vitesse lente, pour éviter tout heurt brutal; le plateau 9 revient à sa position première sur les chemins de roulement $C_1$, $C_2$ constitués par les galets 7. Il suffit alors d'entraîner en rotation les pignons 12 dans le sens contraire aux aiguilles d'une montre pour amener le plateau dans la position de route, c'est-à-dire la position représentée à la fig. 1. On verrouille alors le plateau 9 sur le châssis 1 par tout moyen convenable (par exemple par des broches traversant le plateau 9 et les poutres du châssis 1) lorsque l'extrémité avant du plateau 9 vient au contact de la butée transversale 8. Le déchargement du véhicule $V_1$ à l'arrivée se fait de la façon inverse à celle décrite précédemment.

Il est possible parfois d'utiliser une seule crémaillère et de prévoir des guides pour le plateau 9. A la place de la ou des crémaillères 10 et du ou des pignons 12, on pourrait prévoir un ou plusieurs câbles sans fin disposés convenablement pour s'enrouler sur un treuil à motoréducteur. Ce montage permet également de reculer, pivoter dans les deux sens et ramener en avant le plateau 9 comme cela a déjà été décrit dans l'exemple ci-dessus.

Dans certains cas, il est possible de monter sur le châssis 1 du véhicule des bras pivotants portant un châssis annexe sur lequel est monté un plateau coulissant et pivotant comme décrit ci-dessus. Ainsi il est possible de placer deux rangées de véhicules l'une sur l'autre comme cela est courant pour les remorques destinées au transport de véhicules automobiles. Cependant, et bien que la présente remorque soit surtout destinée au transport de véhicules divers, on peut également employer cette remorque pour le transport de charges reposant soit sur des roues, soit sur des trains de galets.

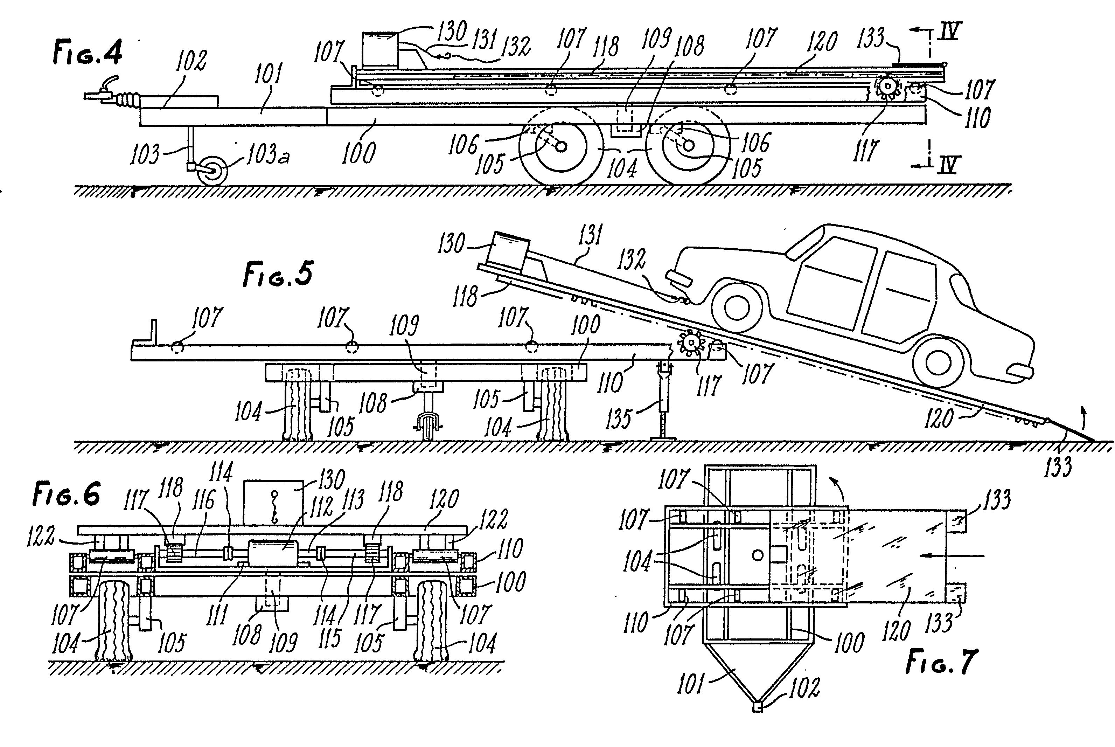

A la fig. 4, on a représenté une remorque dont le châssis 100 est réalisé, comme dans la plupart de cas, par des poutres convenablement entretoisées, ces poutres présentant à leur partie avant 101 un dispositif d'attelage 102 du genre couramment utilisé et qui, par conséquent, ne sera pas décrit plus en détail. Ce dispositif d'attelage comporte d'ailleurs les jonctions électriques nécessaires à la signalisation latérale et arrière de la remorque, à l'éclairage du plateau de celle-ci, à l'éclairage de la plaque de police et également les liaisons, si nécessaire, pour les freins de la remorque. Une jambe de force 103 est prévue à l'avant, cette jambe de force, qui est rétractable et si besoin est pliable, disparaît lors du déplacement de la remorque et n'est mise en place que lorsque celle-ci est en position fixe. Il peut également être prévu, sur la roue 103a de la jambe de force 103, un frein de blocage. Le châssis 100 est supporté par des roues 104 indépendantes montées sur des supports articulés ou jambes 105 comme cela est courant. Ces jambes 105 sont reliées à la partie inférieure du châssis 100 par des blocs de suspension 106. Les roues 104 sont le plus souvent munies de freins soit électriques soit pneumatiques soit hydrauliques commandées par le véhicule tracteur. Dans la partie centrale du châssis 100 est placée une boîte support 108 qui est destinée à recevoir un axe vertical 109 solidaire d'un bâti intermédiaire 110 également réalisé par des poutres convenablement entretoisées et portant, sur sa face supérieure, deux chemins de roulement 107 constitués par des rouleaux montés fous sur des axes solidaires du bâti intermédiaire 110. Ces chemins de roulement sont d'ailleurs bien visibles à la fig. 7. En outre, le bâti intermédiaire comporte, à sa partie arrière, un caisson 111 sur lequel est fixé un motoréducteur 112 qui, par l'intermédiaire d'un arbre traversant 113, peut entraîner deux accouplements 114 transmettant le mouvement de rotation à des arbres 115, 116 sur lesquels sont montés des pignons 117 coopérant avec des crémaillères 118 placées sous un plateau 120.

C'est ce dernier qui supporte le véhicule à transporter. Ce plateau est réalisé le plus généralement en poutrelles métalliques revêtues convenablement de façon à former une surface plane très rigide et qui repose, par l'intermédiaire de rails 122, sur les trains de roulement 107.

Finalement, il est prévu, à l'avant du plateau 120, un treuil 130 qui, à l'aide du câble 131 et du crochet 132, permet l'attelage du véhicule engagé sur le plateau 120 pour que celui-ci prenne la position recherchée.

Comme le montre la fig. 5, le plateau 120 présente deux patins 133 pour permettre aux roues du véhicule endommagé de rouler aisément jusque sur le plateau 120.

Le fonctionnement du véhicule sus-indiqué est le suivant.

Lorsqu'un accident s'est produit et que le véhicule endommagé se trouve hors de la voie publique sur le bas-côté, par exemple dans une position plus ou moins transversale à celle-ci, on amène le véhicule de transport auxiliaire en position près de ce véhicule endommagé, on fait pivoter d'un angle voulu le bâti intermédiaire 110 puis on place le plateau 120 dans le prolongement de ce bâti 110 (fig. 5). On tire alors à l'aide du crochet 132 fixé sur l'extrémité du câble 131 du treuil 130 le véhicule endommagé sur le plateau incliné 120 (comme cela est bien représenté à la fig. 5). Lorsque le véhicule se trouve en place, le plateau 120 a repris sa position horizontale du fait du poids du véhicule endommagé. Il suffit alors, à l'aide du motoréducteur 112 et des accouplements 114, de ramener par l'intermédiaire des pignons 117, des crémaillères 118 le plateau 120 sur le bâti intermédiaire 110. Ce dernier est alors replacé dans l'axe du châssis 100 puis verrouillé par tout moyen approprié. Le véhicule de secours est alors prêt à reprendre la route vers le lieu de réparation du véhicule endommagé.

Bien entendu, avant de charger le véhicule, on a mis en place la jambe de force 103 que l'on a débloquée et repliée avant de reprendre la route.

En plus de l'axe 109 reposant dans la boîte 108, on peut prévoir sur le dessus du châssis 100 une plaque plane sur laquelle peuvent rouler des galets fous non représentés solidaires du dessous du bâti intermédiaire 110.

Dans ce qui précède, on a vu qu'il s'agissait d'un véhicule de transport remorqué comme représenté au dessin mais on peut également équiper le châssis d'un camion de l'ensemble bâti intermédiaire-plateau.

Dans certains cas l'arrière du bâti intermédiaire 110 peut comporter deux jambes de force télescopiques repliables 135.

Revendications

1. Remorque à plateau mobile et pivotant plus spécialement pour le transport de véhicules divers, caractérisée
en ce que le châssis comporte deux chemins de roulement
longitudinaux $C_1$, $C_2$ placés de part et d'autre du châssis (1) et à sa partie arrière au moins un palier dans
lequel peut tourner un pignon (12) entraîné par un réducteur (14), ce pignon (12) coopérant avec une crémaillère
(10) fixée sous le plateau mobile (9) reposant normalement sur les chemins de roulement $C_1$, $C_2$ mais pouvant
pivoter sur l'arrière du châssis (1) de la remorque, ce
plateau pivotant comportant, également à sa partie avant,
un treuil (15) pour permettre la traction des véhicules
par un câble (16) sur le plateau (1) de la remorque.

2. Remorque suivant la revendication 1, caractérisée en
ce que le dessous du plateau pivotant (9) comporte deux
crémaillères coopérant avec deux pignons solidaires du
châssis de la remorque, ces pignons étant alors disposés
de part et d'autre du réducteur d'entraînement.

3. Remorque suivant l'une des revendications 1 et 2, caractérisée en ce qu'une butée transversale (8) est prévue
sur le châssis (1) de la remorque pour limiter la course
du plateau mobile pivotant (9).

4. Remorque suivant l'une des revendications 1 à 3, caractérisée en ce que le réducteur est indifféremment entraîné manuellement ou par un moteur ainsi que le treuil.

5. Remorque suivant l'une des revendications 1 à 4, caractérisée en ce que le réducteur est à double sortie
dont les arbres sont reliés par des accouplements aux
pignons en prise avec les crémaillères.

6. Remorque à plateau mobile et pivotant plus spécialement pour le transport de véhicules divers, caractérisée
par un véhicule pouvant être soit remorqué, soit autotracté qui comporte un châssis normal (100) monté sur ou
un plusieurs trains de roues (104), ce châssis normal
présentant sensiblement en son centre une boîte verticale
(108) sur laquelle peut pivoter un bâti intermédiaire
(110) présentant un axe central (109) et, si nécessaire,
pour assurer un bon fonctionnement du pivotement de ce
bâti intermédiaire, des galets fous disposés d'une manière circulaire et reposant sur un plateau monté sur la
partie supérieure du châssis (100), puis le bâti intermédiaire (110) supporte au moins deux chemins de roulement
longitudinaux (107) placés de part et d'autre de ce bâti
puis, à la partie arrière de ce dernier, est monté au
moins un palier dans lequel peut tourner un pignon (117)
entraîné par un mécanisme réducteur (112), ce pignon coopérant avec une crémaillère (118) fixée sous un plateau
mobile (120) reposant normalement sur les chemins de roulement précités mais pouvant pivoter sur l'arrière du bâti intermédiaire (110) placé sur la remorque, ce plateau
(120) portant également un treuil (130) pour permettre la
traction du véhicule, par un câble (131), sur le plateau
de la remorque.

7. Remorque mobile suivant la revendication 1, caractérisée en ce que le dessous du plateau pivotant (120) comporte plus d'une crémaillère (118) coopérant avec plus
d'un pignon (117) solidaire du bâti intermédiaire (110)
de la remorque, ces pignons étant alors disposés de part
et d'autre du mécanisme réducteur d'entraînement (112).

*Fig:1*

*Fig:2*

*Fig:3*

0061959

FIG.4

FIG.5

FIG.6

FIG.7

0061959

Office européen
des brevets

**RAPPORT DE RECHERCHE EUROPEENNE**

**0061959**

Numéro de la demande

EP 82 40 0481

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | US - A - 3 720 336 (MURRAY) <br> * en entier * | 1,6 | B 60 P 3/07 |
| A | US - A - 3 624 786 (LUNDAHL) <br> * en entier * | 1,6 | |
| A | FR - E - 7 862 (SAVON) <br> * en entier * | 1,2 | |
| A | FR - A - 544 001 (BENARD) <br> * en entier * | 1,2 | DOMAINES TECHNIQUES RECHERCHES (Int. Cl. ³) |
| A | FR - A - 2 357 401 (PETIT) | | B 60 P |
| A | FR - A - 2 159 698 (LEVAVASSEUR) | | |
| A | FR - A - 2 372 050 (J.I.G.E.) | | |

Le présent rapport de recherche a été établi pour toutes les revendications

| Lieu de la recherche | Date d'achèvement de la recherche | Examinateur |
|---|---|---|
| La Haye | 05-07-1982 | SCHMITTER |